Europäisches Patentamt

European Patent Office

Office européen des brevets

(11) Veröffentlichungsnummer: **0 457 064 A1**

# (12) EUROPÄISCHE PATENTANMELDUNG

(21) Anmeldenummer: 91106529.0

(51) Int. Cl.5: **G05D 1/02**, G05D 1/03

(22) Anmeldetag: 23.04.91

(30) Priorität: 14.05.90 EP 90109059

(43) Veröffentlichungstag der Anmeldung:
21.11.91 Patentblatt 91/47

(84) Benannte Vertragsstaaten:
AT CH DE ES FR GB IT LI NL SE

(71) Anmelder: SIEMENS AKTIENGESELLSCHAFT
Wittelsbacherplatz 2
W-8000 München 2(DE)

(72) Erfinder: Schröder, Martin, Dr.
Anna-Hermann-Strasse 12B
W-8522 Herzogenaurach(DE)
Erfinder: Gose, Horst, Dipl.-Ing.
Romesstrasse 8b
W-8520 Erlangen(DE)
Erfinder: Jantzer, Michael, Dipl.-Ing.
Marienbacherstrasse 36
W-7000 Stuttgart 50(DE)
Erfinder: Heller, Jürgen, Dipl.-Ing.
Stellaweg 15
W-7000 Stuttgart 80(DE)
Erfinder: Schumacher, Hans, Dipl.-Inform.
Gutbrodstrasse 83
W-7000 Stuttgart(DE)

(54) Verfahren zur Steuerung mobiler Systeme.

(57) Das Verfahren zur Steuerung mobiler Systeme, wie sie beispielsweise Flur-Förder-Fahrzeuge oder mobile Roboter darstellen, ermöglicht eine von absoluten Koordinaten unabhängige Bahnführung der mobilen Systeme. Es ist eine beliebige Anzahl von Bezugskoordinatensystemen (R1...R7) vorgesehen, deren Koordinaten untereinander nicht bekannt sind. Ein mobiles System wird jeweils in den Koordinaten eines Bezugskoordinatensystems (R1...R7) geführt und bei Verlassen des Bereichs (BE1...BE3) eines Bezugskoordinatensystems (R1...R7) nach erfolgter Positionsvermessung in ein anderes Bezugskoordinatensystem übernommen.

Die Erfindung bezieht sich auf ein Verfahren zur Steuerung mobiler Systeme, beispielsweise von Flur-Förder-Fahrzeugen oder mobilen Robotern. Aus der deutschen Patentschrift 33 15 051 ist ein Verfahren zum selbsttätigen führerlosen Betrieb von Fahrzeugen bekannt, bei dem in der Nähe der Fahrbahnen Referenzmarken angebracht sind, gegenüber denen die Fahrzeug-Istposition vermessen, mit einer vorher geteachten Fahrzeug-Sollposition verglichen und gegebenenfalls korrigiert wird.

Bei diesem Verfahren wird davon ausgegangen, daß die Position bzw. die Koordinaten der Referenzpunkte bezüglich eines Ausgangspunktes (absolutes Koordinatensystem) bekannt sind, um eine sinnvolle Korrektur zur einmal geteachten Bahn erreichen zu können. Dabei kann sich die als Voraussetzung zur Durchführung des Verfahrens erforderliche Koordinatenbestimmung der Referenzpunkte als äußerst schwierig erweisen, wenn sich die Referenzpunkte beispielsweise an räumlich weit entfernten Orten oder in unübersichtlichen Räumen oder im nicht überschaubaren Gelände befinden.

Aufgabe der Erfindung ist es, ein Verfahren zur Steuerung mobiler Systeme so auszuführen, daß auch eine von absoluten Koordinaten unabhängige Steuerung durchführbar ist.

Diese Aufgabe wird durch folgende Merkmale gelöst:

a) Es sind Mittel zur Positionserfassung und Positionsvermessung der mobilen Systeme gegenüber räumlich angeordneten Bezugspunkten, denen jeweils ein Bezugskoordinatensystem zugeordnet ist, vorgesehen,

b) die mobilen Systeme werden auf vorgebbaren räumlichen Bahnen im jeweiligen Bezugskoordinatensystem mittels einer Steuerungseinrichtung geführt,

c) die Ist-Position eines mobilen Systems in einem Bezugskoordinatensystem wird gegenüber einem jeweiligen Bezugspunkt vermessen,

d) die Vermessung der Ist-Position eines mobilen Systems in einem anderen Bezugskoordinatensystem ist bei Erreichen einer Ist-Lage auf der im bisherigen Bezugskoordinatensystem zurückgelegten räumlichen Bahn vornehmbar,

e) das mobile System wird auf einer vorgebbaren räumlichen Bahn im anderen Bezugskoordinatensystem gesteuert, wobei eine Positions-Korrektur zwischen Ist-Position und Soll-Position durchführbar ist,

f) in jeweiligen weiteren Bezugskoordinatensystemen werden die Schritte d) und e) wiederholt.

Gemäß dem verfahren kann die Positionskorrektur von der Ist-Position- zur Soll-Position unmittelbar erfolgen. Der Begriff Positionskorrektur ist aber vor allem so zu verstehen, daß eine allmähliche (sanfte) Annäherung des mobilen Systems an die Soll-Bahn vorgenommen wird, wobei die gemessene Soll-Position zur Bestimmung einer Korrekturbahn verwendet wird.

Damit können ein oder mehrere mobile Systeme in einem vorgebbaren Bereich eines Bezugskoordinatensystems geführt werden, ohne daß die Position eines mobilen Systems bezüglich eines absoluten Koordinatensystems bekannt sein muß. Nach Ermittlung der Ist-Position und dem Beginn der Korrekturbahn verläßt das System den Bereich des alten Bezugskoordinatensystems und wird dann bezüglich des neuen Bezugskoordinatensystems geführt.

Das Verfahren sieht eine vorteilhafte Kombination vor, wobei die jeweiligen Bezugskoordinaten in absolute Koordinaten umrechenbar sind, wenn die Lage bzw. die Koordinaten der Bezugspunkte bezüglich des absoluten Koordinatensystems bekannt sind. Die Führung bzw. Steuerung eines mobilen Systems kann dann wahlweise in absoluten oder in Bezugskoordinaten vorgenommen werden. Darüber hinaus ist es auch möglich, ein mobiles System in Bezugskoordinaten zu steuern und einer Bedienperson, beispielsweise an einem CAD-Arbeitsplatz, die Position des mobilen Systems in absoluten Koordinaten anzuzeigen.

Die Steuereinrichtung, die beispielsweise ein speziell für dieses System ausgelegter Rechner oder eine herkömmliche Datenverarbeitungseinrichtung sein kann und die mit den Mitteln zur Positionserfassung und Positionsvermessung kommuniziert, kann dabei zentral angeordnet werden. Damit lassen sich Systeme, die bereits über einen zentralen Rechner verfügen, einfach auf das neue Verfahren umrüsten.

Es kann jedoch auch auf jedem mobilen System eine Steuereinrichtung untergebracht sein, so daß die einzelnen mobilen Systeme weitgehend unabhängige und selbständige Einheiten bilden. Aus diesem Grund, können auch die Mittel zur Positionsvermessung mit den mobilen Systemen mitbewegt werden.

Die von den mobilen Systemen abzufahrenden Bahnen lassen sich sowohl durch Teachen als auch über CAD-Systeme vorgeben.

Ein Ausführungsbeispiel der Erfindung wird anhand einer Figur im folgenden näher beschrieben.

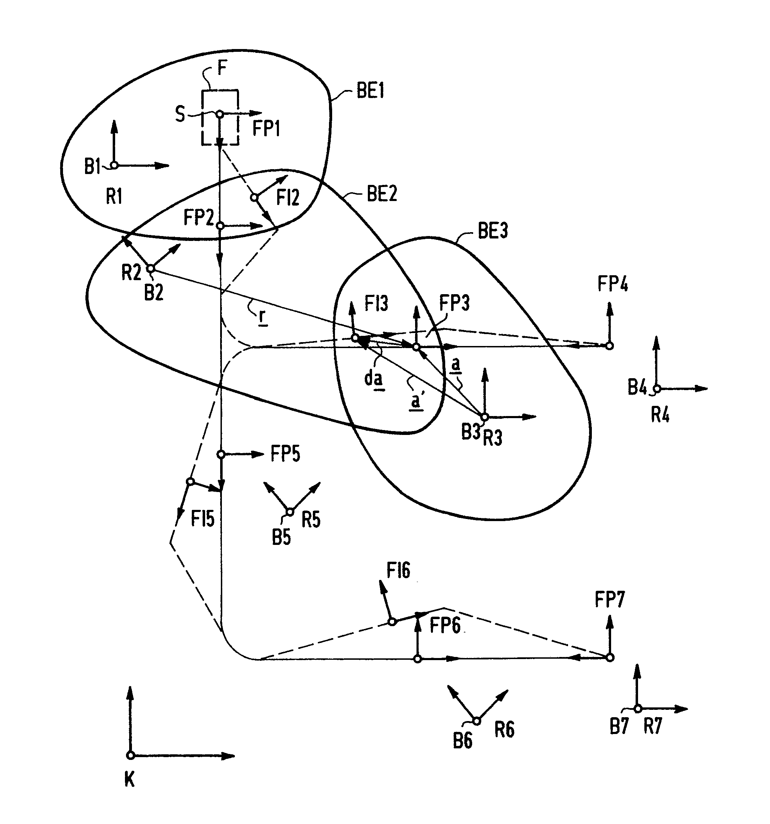

Die Figur zeigt in der Ebene verteilte Bezugspunkte B1...B7, denen jeweils ein Bezugskoordinatensystem R1...R7 zugeordnet ist. Im Ausführungsbeispiel fallen die Bezugspunkte B1...B7 mit dem jeweiligen Ursprung eines Bezugskoordinatensystems R1...R7 zusammen, sie könnten sich aber auch an beliebigen anderen Koordinaten eines jeweiligen Bezugskoordinatensystems R1...R7 befinden. Es wird zunächst davon ausgegangen, daß die Koordinaten der Bezugspunkte B1...B7 untereinander oder gegenüber einem absoluten Koordinatensystem nicht bekannt sind.

Die Figur zeigt an weiteren sieben Punkten in der Ebene die Soll-Positionen eines fahrzeugfesten Koordinatensystems FP1...FP7. Diese Punkte befinden sich alle auf durchgezogenen Linien, welche die Soll-Bahnen der mobilen Systeme darstellen. An weiteren sechs Punkten sind jeweils die Ist-Positionen eines fahrzugfesten Koordinatensystems FI1...FI6 gezeigt, die vom Fahrzeug F bzw. von einem mobilen System im Automatik-Betrieb erreicht werden. Diese Ist-Koordinatensysteme FI1...FI7 befinden sich jeweils auf gestrichelt gezeichneten Ist-Bahnen, die von den Soll-Bahnen abweichen.

Das Fahrzeug F, das der Übersichtlichkeit halber nur einmal als gestricheltes Rechteck angedeutet ist, soll durch automatische Steuerung auf einer vorgegebenen Sollbahn (durchgezogene Linien) geführt werden. Die Sollbahnen können der Fahrzeugsteuerung vom Anwender über ein Programmiersystem vorgegeben werden. Mögliche Programmiermethoden sind zum einen sogenannte on-line-Verfahren, wie z.B. "Teach-in" oder "Playback" und zum anderen CAD-gestützte off-line-Verfahren. Auch hybride Verfahren, wie z.B. die textuelle Programmerstellung durch ein off-line-Verfahren und die Programmierung der Sollbahnen durch ein on-line-Verfahren sind denkbar. Bei der textuellen Programmierung im "Teach-in"-Verfahren z.B. programmiert der Anwender entlang der zu programmierenden Sollbahnen - ähnlich der "Teach-in"-Programmierung von Industrierobotern - einzelne Stützpunkte, die dann in der Steuerung on-line in Form von Geraden oder Bogensegmenten verbunden werden.

Nach einer Bezugspunktfahrt mit dem Fahrzeug F, bei der Lenk- und Fahrantrieb in definierte Ausgangsstellungen gebracht werden, erfolgt das Teachen der Bahnstützpunkte. Die Ermittlung der Bezugskoordinaten erfolgt dabei durch die internen Meßsysteme und die Vorwärtstransformation.

Zur automatischen Steuerung des Fahrzeugs F sind in der Figur nicht gezeigte Mittel zur Positionserfassung und Positionsvermessung sowie eine Steuereinrichtung, die eine herkömmliche Datenverarbeitungseinrichtung oder ein Prozeßrechner sein kann, vorgesehen.

Als Mittel zur Positionserfassung können beispielsweise herkömmliche inkrementale Weggeber sowie Positionsgeber am Fahrzeug verwendet werden. Als Mittel zur Positionsvermessung kommen Ultraschall-Meßsysteme, Laser-Meßsysteme in Kombination mit speziellen Reflektoren, Kamerasysteme mit Markierungen, bildverarbeitende Systeme oder andere Positionsmeßsysteme in Frage. Die Mittel zur Positionsvermessung können dabei am Fahrzeug untergebracht sein. Dies ist so zu verstehen, daß sich beispielsweise bei einem Ultraschall-Meßsystem die signalgebenden Einrichtungen am Fahrzeug befinden, während sich die Ultraschallreflektoren am Bezugspunkt B1...B7 befinden. Es besteht auch die Möglichkeit, die aktiven Teile des jeweiligen Meßsystems in der Umgebung und die passiven Teile am Fahrzeug zu installieren.

Am vorgegebenen Startpunkt S wird die Positionsvermessung des Fahrzeugs gegenüber dem Bezugspunkt B1 eingeleitet. Dabei wird mit den Mitteln zur Positionsvermessung die Position des Fahrzeugs F bezüglich dessen Lage und Orientierung im Bezugskoordinatensystem R1 bestimmt.

Wie der Übersichtlichkeit halber nur anhand der Bezugskoordinatensysteme R1...R3 gezeigt ist, ist jedem Bezugskoordinatensystem ein bestimmter Bereich BE1...BE3 zugeordnet, in dem das Fahrzeug F bezüglich des jeweiligen Bezugskoordinatensystems geführt werden kann. Die Bereiche der Bezugskoordinatensysteme R1...R7 können sich dabei überlappen, wie anhand der Bereiche BE1...BE3 gezeigt ist.

Dem Fahrzeug F, dessen Position bezüglich des Bezugskoordinatensystems R1 vermessen wurde, werden nun rechnergesteuert Steuersignale zugeführt, worauf die Antriebseinheit des Fahrzeugs F dieses aufgrund der vorgegebenen Sollwerte antreibt. Über die Mittel zur Positionserfassung wird einem nicht gezeigten Rechner jeweils der zurückgelegte Weg sowie Positionsänderungen durchgegeben, so daß die Position des Fahrzeugs F im Bezugskoordinatensystem R1 ständig erfaßt wird. Wenn der Rechner eine bestimmte vorgegebene Position - hier die Position FP2 - berechnet hat, wird die Übernahme des Fahrzeugs in das Bezugskoordinatensystem R2 eingeleitet.

Die Übernahme des Fahrzeugs F in ein anderes Bezugskoordinatensystem R1...R7 ist aber nicht notwendigerweise von einer Positionsmeldung abhängig. Sie könnte beispielsweise auch durch eine Lichtschranke oder durch andere Ortungssysteme ausgelöst werden. In diesem Fall würde die Übernahme bei Erreichen einer tatsächlichen Ist-Lage ausgelöst werden, während bei der Positionsmeldung zwar auch eine bestimmte Ist-Lage FI2 erreicht ist, diese aber mit der Soll-Lage FP2 nicht übereinstimmen muß und in der Regel auch nicht übereinstimmt.

Da die Mittel zur Positionserfassung sowie die Antriebs- und Steuerungseinheit des Fahrzeugs fehlerbehaftet sind, ergibt sich eine Abweichung zwischen Soll-Position FP2 und Fahrzeug-Ist-Position FI2 im Übergabebereich, also im Überlappungsbereich der Bereiche BE1 und BE2. Die Positionsvermessung des Fahrzeugs F an der Ist-Position FI2 bezüglich des Bezugspunktes B2 im Bezugskoordinatensystem R2, wird nun durchgeführt. Nach der Positionsbestimmung kann das Fahrzeug dann seinen Weg im Bereich BE2 des Bezugskoordinatensystems R2 fortsetzen. Der Rechner berücksichtigt dabei gleichzeitig die Abweichung zwischen Soll-Position FP2 und Ist-Position FI2 und bringt zunächst das Fahrzeug von der Ist-Position FI2 wieder zurück auf die vorgegebene Sollbahn, wie durch die gestrichelte Linie angedeutet ist.

Im Bereich BE3 des Bezugskoordinatensystems R3 ist die Fehlerkorrektur anhand der Vektoren a, a' und da gezeigt. Das Fahrzeug wird solange im Bereich BE2 des Bezugskoordinatensystems B2 geführt, bis der Rechner über die Mittel zur Positionserfassung die durch den Vektor a angegebene Position FP3 bestimmt hat. Von der Soll-Position FP3 ist die Lage und Orientierung des Fahrzeugs F bezüglich des Bezugskoordinatensystems R3, also auch der Positionsvektor a beispielsweise durch "teachen", bekannt. Durch die von der Fahrzeug-Ist-Position FI3 aus vorzunehmende Lagevermessung ergibt sich der Ist-Positionsvektor a', so daß aus den beiden Vektoren a, a' der Differenzvektor da bestimmt werden kann. Der Rechner besitzt damit alle Informationen über Lage und Orientierung des Fahrzeugs F im Bezugskoordinatensystem R3, so daß die Steuerung des Fahrzeugs einschlielich einer Bahnkorrektur in diesem Bezugskoordinatensystem durchgeführt werden kann.

Das Verfahren hat den Vorteil, daß die Positionen der Bezugspunkte B1...B7 nicht mittels einer Meßeinrichtung, z.B. durch einen Theodolit, absolut erfaßt werden müssen. Ein weiterer Vorteil besteht darin, daß sich die Fehler, die sich während des Teachens durch die Koppelnavigation ergeben, nicht aufaddieren, sondern sich nur zwischen zwei Bezugskoordinatensystemen B1 ...B7 auswirken, da die Fahrzeugposition und -orientierung stets relativ zu den Bezugskoordinatensystemen erfolgt und die anschließende Bahn inklusive Bahnkorrektur im jeweiligen Bezugskoordinatensystem beschrieben wird.

Sind die Bahnstützpunkte bzw. die Soll-Positionen FP1...FP7 zu den Bezugspunkten B1...B7 geteacht, so könnten durch das Verfahren die logischen Anweisungen sowie Beschleunigung und Geschwindigkeit als auch die Sollbahnen programmiert werden.

Durch die Mittel zur Positionserfassung und Positionsvermessung lassen sich die Bezugskoordinatensysteme R1...R7 relativ zueinander vermessen. Faßt man nun eines der Bezugskoordinatensysteme R1...R7 als Absolutkoordinatensystem auf, so können die verbleibenden Bezugskoordinatensysteme bezüglich dem Absolutkoordinatensystem beschrieben werden. Dies ermöglicht beispielsweis die graphische Erstellung eines Hallenlayouts, welches zur Programmierung benutzt werden kann.

Sind die Bezugspunkte B1...B7 und andere geometrische Abmessungen mit der Genauigkeit von CAD-Architekturdaten bekannt, so lassen sich die gemessenen Daten und die CAD-Daten überlagern. Ausgehend vom Ursprung des Hallenlayouts können durch Betrachtung der Bezugskoordinatensysteme R1...R7 die CAD-Daten entsprechend transformiert werden. Die eigentliche Programmierung der Sollbahnen erfolgte dann am CAD-Bildschirm durch Verbinden der Stützpunkte mittels Geraden oder Bogensegmenten.

Ist die Lage der Bezugskoordinatensysteme B1...B7 zu einem absoluten Hallenkoordinatensystems K bekannt, so kann die Vorgabe der Sollbahnen durch off-line-Programmierung mittels CAD erfolgen. Die absolute Vermessung der Bezugskoordinatensysteme R1...R7 kann z.B. mittels Theodolit erfolgen. Das mobile System kann aber trotzdem im Automatikbetrieb auch im jeweiligen Bezugskoordinatensystem R1...R7 geführt werden, so daß die Vorteile dieses Verfahrens erhalten bleiben.

**Patentansprüche**

1. Verfahren zur Steuerung mobiler Systeme mit folgenden Merkmalen:
   a) Es sind Mittel zur Positionserfassung und Positionsvermessung der mobilen Systeme gegenüber räumlich angeordneten Bezugspunkten (B1...B7), denen jeweils ein Bezugskoordinatensystem (R1...R7) zugeordnet ist, vorgesehen,
   b) die mobilen Systeme werden auf vorgebbaren räumlichen Bahnen im jeweiligen Bezugskoordinatensystem (R1...R7) mittels einer Steuerungseinrichtung geführt,
   c) die Ist-Position (FI1...FI6) eines mobilen Systems in einem Bezugskoordinatensystem (R1...R7) wird gegenüber einem jeweiligen Bezugspunkt (B1...B7) vermessen,
   d) die Vermessung der Ist-Position (FI1...FI6) eines mobilen Systems in einem anderen Bezugskoordinatensystem (R1...R7) ist bei Erreichen einer Ist-Lage auf der im bisherigen Bezugskoordinatensystem (R1...R7) zurückgelegten räumlichen Bahn vornehmbar,
   e) das mobile System wird auf einer vorgebbaren räumlichen Bahn im anderen Bezugskoordinatensystem (R1...R7) gesteuert, wobei eine Positionskorrektur zwischen Ist-Position (FI1...FI6) und Soll-Position (FP1...FP7) durchführbar ist,
   f) in jeweiligen weiteren Bezugskoordinatensystemen (R1...R7) werden die Schritte d) und e) wiederholt.

2. Verfahren nach Anspruch 1, **dadurch gekennzeichnet**, daß die Koordinaten der Bezugspunkte bezüglich eines absoluten Koordinatensystems (K) bekannt und die jeweiligen Bezugskoordinaten in absolute Koordinaten umrechenbar sind.

3. Verfahren nach Anspruch 1 oder 2, **dadurch gekennzeichnet,** daß die Steuereinrichtung zentral angeordnet ist und mit den Mitteln zur Positionserfassung und Positionsvermessung kommunizieren kann.

4. Verfahren nach Anspruch 1 oder 2, **dadurch gekennzeichnet,** daß jedes mobile System eine Steuereinrichtung enthält, die mit den Mitteln zur Positionserfassung und -vermessung kommunizieren kann.

5. Verfahren nach einem der Ansprüche 1 bis 4, **dadurch gekennzeichnet,** daß die Mittel zur Positionsvermessung mit den mobilen Systemen mitbewegt werden.

6. Verfahren nach einem der Ansprüche 1 bis 4, **dadurch gekennzeichnet,** daß sich die Mittel zur Positionsvermessung jeweils an einem Bezugspunkt (B1...B7) befinden.

7. Verfahren nach einem der vorstehenden Ansprüche, **dadurch gekennzeichnet,** daß eine jeweilige Bahn eines mobilen Systems geteacht wird.

8. Verfahren nach einem der Ansprüche 1 bis 6, **dadurch gekennzeichnet,** daß die Bahnen der mobilen Systeme durch mindestens ein CAD-System vorgebbar sind.

# EUROPÄISCHER RECHERCHENBERICHT

**Europäisches Patentamt**

Nummer der Anmeldung

**EP 91 10 6529**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 505 474 (THE GENERAL ELECTRIC COMP.)<br>* Seite 5, Zeile 1 - Seite 15, Zeile 32; Figuren 1-10 *<br>- - - | 1 | G 05 D 1/02<br>G 05 D 1/03 |
| A | WO-A-8 604 430 (THE GENERAL ELECTRIC COMP.)<br>* Ansprüche 1-5; Figuren 1-3 *<br>- - - | 1 | |
| A | EP-A-0 193 985 (INDUSTRIAL CONTRACTORS HOLLAND B.V.)<br>* Seite 5, Zeile 18 - Seite 13, Zeile 28; Figuren 1-7 *<br>- - - | 1 | |
| A | DE-A-3 912 353 (NISSAN MOTOR CO, LTD)<br>* Spalte 3, Zeile 7 - Spalte 15, Zeile 38; Figuren 1-22 *<br>- - - | 1 | |
| A | EP-A-0 236 614 (SI HANDLING SYSTEMS, INC.)<br>* Seite 3, Zeile 26 - Seite 8, Zeile 4; Figuren 1-13 *<br>- - - | 1 | |
| D,A | DE-A-3 315 051 (KÖTTGEN GMBH)<br>* Seite 7, Zeile 1 - Seite 10, Zeile 26; Figuren 1-3 *<br>- - - - - | 1 | |
| | | | **RECHERCHIERTE SACHGEBIETE (Int. Cl.5)**<br><br>G 05 D |

Der vorliegende Recherchenbericht wurde für alle Patentansprüche erstellt

| Recherchenort | Abschlußdatum der Recherche | Prüfer |
|---|---|---|
| Den Haag | 19 August 91 | HELOT H.V. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

-------------------------------------

& : Mitglied der gleichen Patentfamilie, übereinstimmendes Dokument